# EUROPEAN PATENT SPECIFICATION

(11) **EP 2 740 654 B1**
(45) Date of publication and mention of the grant of the patent: **28.09.2016**
(21) Application number: 11870297.6
(22) Date of filing: 01.08.2011
(51) Int. Cl.: B62J 99/00, G01P 3/487

(54) **SENSING DEVICE AND BICYCLE PROVIDED WITH SENSING DEVICE**
SENSORVORRICHTUNG UND DAMIT AUSGESTATTETES FAHRRAD
DISPOSITIF DE DÉTECTION ET BICYCLETTE ÉQUIPÉE DUDIT DISPOSITIF

(43) Date of publication of application: 11.06.2014
(73) Proprietor: Panasonic Corporation, Kadoma-shi, Osaka 571-8501 (JP)
(72) Inventor: OBITA, Naoki, Osaka 540-6207 (JP)
(74) Representative: Grünecker Patent- und Rechtsanwälte PartG mbB
(86) International application number: PCT/JP2011/004354
(87) International publication number: WO 2013/018127

(56) References cited:
- EP-A1- 1 508 514
- EP-A1- 1 923 302
- JP-A- 2008 055 930
- JP-A- 2008 120 345
- US-A1- 2007 000 325

## Description

### Technical Field

The present invention relates to a sensing device used for detecting, for example, a speed, and a bicycle provided with the sensing device.

### Background Art

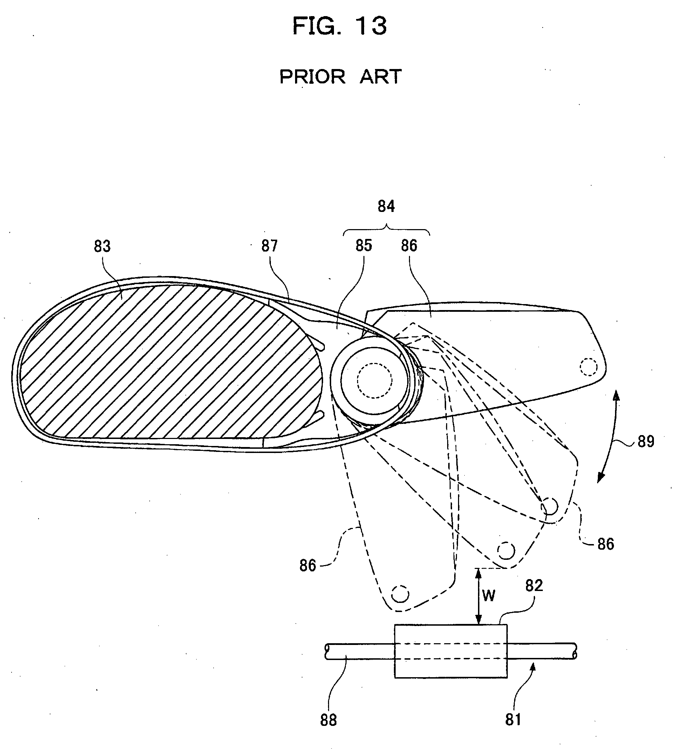

FIG. 13 shows a conventional sensing device for detecting, for example, the traveling speed of a bicycle. The sensing device detects the rotation of a front wheel 81 to detect the traveling speed of the bicycle based on the rotation. Specifically, a magnet 82 is attached to a spoke 88 of the front wheel 81 of a bicycle while a sensor 84 is attached to a front fork 83 of the bicycle. The sensor 84 includes a rubber pad 85 attached to the front fork 83 and a sensor main unit 86 that detects the magnetism of the magnet 82.

The sensor main unit 86 is fit into the rubber pad 85 so as to pivot in one direction 89. The rubber pad 85 and the sensor main unit 86 are bound to the front fork 83 with a band 87.

With this configuration, each time the front wheel 81 is rotated such that the magnet 82 approaches and crosses the sensor main unit 86, the sensor main unit 86 detects the magnetism of the magnet 82 to transmit a detection signal and then detects the traveling speed of the bicycle based on the number of detection signals per unit time.

Such a sensing device is described in, for example, Patent Literature 1 below:

### Citation List

### Patent Literature

Patent Literature 1: Japanese Patent Laid-Open No. 2008-55930

**Further prior art is known from documents** EP 1923302 A1 **and** EP 1508514 A1**.**

Document EP1923302 is considered being the closest prior art and show the following features:
A sensing device that detects a rotation of a wheel of a bicycle, the sensing device comprising:
   a mobile-side sensing body providable on the wheel; and
   an immobile-side sensing body providable on a frame of the bicycle, the immobile-side sensing body including a mounting section attachable to the frame, a sensor that detects the mobile-side sensing body crossing the immobile-side sensing body during a rotation of the wheel, and a supporting section that supports the sensor, the sensor being movable in a first direction that increases or reduces a distance between the mounting section and the sensor with respect to the supporting section, the sensor including a fixing member that fixes the sensor to the supporting section, wherein the sensor is pivotable about the supporting section in second direction different from the first direction.

### Summary of Invention

### Technical Problem

In the conventional form, the sensor main unit 86 decreases in sensitivity if a distance W between the sensor main unit 86 and the magnet 82 exceeds a normal distance. Thus, the sensor main unit 86 needs to be precisely positioned with respect to the magnet 82 so as to keep the distance W between the sensor main unit 86 and the magnet 82 at the normal distance.

At this point, the orientation of the sensor main unit 86 can be adjusted by rotating the sensor main unit 86 in the direction 89 with respect to the rubber pad 85. Unfortunately, the mounting position of the sensor main unit 86 (sensor) is hard to precisely adjust with ease with respect to the magnet 82.

An object of the present invention is to provide a sensing device that can precisely adjust the mounting position of a sensor with ease, and a bicycle provided with the sensing device.

### Solution to Problem

**The object is solved by the subject matter of claim 1.**

With this configuration, the mounting section of the immobile-side sensing body is attached to the frame and the sensor is moved in the first direction. This can precisely and easily adjust the mounting position of the sensor. After the mounting position of the sensor is adjusted, the fixing member fixes the sensor to the supporting section, thereby keeping a distance between the sensor and the mobile-side sensing body at a normal distance.

A rotation of the wheel causes the mobile-side sensing body to cross the immobile-side sensing body. At this point, the sensor of the immobile-side sensing body detects the mobile-side sensing body, thereby detecting the rotation of the wheel.

A sensing device according to the present invention, wherein the sensor is pivotable about the supporting section in a second direction different from the first direction.

With this configuration, the sensor is pivoted in the second direction so as to easily adjust the orientation of the sensor with respect to the mobile-side sensing body. This can prevent a reduction in sensitivity.

A sensing body according to a second aspect of the present invention, wherein the fixing member connects the sensor and the supporting section, and the sensor is pivotable about the fixing member in the second direction.

With this configuration, the sensor is connected and fixed to the supporting section with the fixing member.

A sensing device according to a third aspect of the present invention further includes a guide device that guides the sensor in the first direction and limits the pivoting of the sensor to a fixed range.

With this configuration, when the sensor is moved in the first direction, the sensor is guided in the first direction by the guide device. Thus, the sensor can be smoothly moved in the first direction. Moreover, the pivoting of the sensor is limited (restricted) to the fixed range by the guide device, preventing the sensor fixed to the supporting section with the fixing member from pivoting beyond the fixed range. This facilitates an operation for fixing the sensor with the fixing member.

A sensing device according to a fourth aspect of the present invention, wherein the guide device has a pair of guide surfaces provided on one of the supporting section and the sensor, and a guide protrusion that is provided on the other and is inserted between the guide surfaces, and
the guide surfaces are formed along the first direction and are opposed to each other in the second direction.

With this configuration, when the sensor is moved in the first direction, the guide protrusion is guided to the guide surfaces, reliably moving the sensor in the first direction.

A sensing device according to a fifth aspect of the present invention, wherein if the sensor is moved in the first direction to a release position where the distance between the mounting section and the sensor is maximized, the guide protrusion is removed from the guide surfaces so as to lift a restriction on the pivoting range of the sensor.

A sixth aspect of the present invention is a bicycle including the sensing device according to any one of the first to fifth aspects, wherein the mobile-side sensing body is attached to a spoke of the wheel.

With this configuration, the sensing device can detect the rotation of the wheel and determine, for example, the traveling speed or the traveling distance of the bicycle based on the.rotation.

### Advantageous Effect of Invention

As has been discussed, the present invention can precisely and easily adjust the mounting position of a sensor, thereby keeping a distance between the sensor and a mobile-side sensing body at a normal distance. This can prevent a reduction in detection sensitivity.

### Brief Description of Drawings

[FIG. 1] FIG. 1 illustrates a bicycle provided with a sensing device according to an embodiment of the present invention.
[FIG. 2] FIG. 2 is a plan view of the sensing device.
[FIG. 3] FIG. 3 is a perspective view illustrating an immobile-side sensing body in the sensing device diagonally from above.
[FIG. 4] FIG. 4 is a perspective view illustrating the immobile-side sensing body in the sensing device diagonally from below.
[FIG. 5] FIG. 5 is a cross-sectional view taken along the arrows X-X of FIG. 2.
[FIG. 6] FIG. 6 is an exploded cross-sectional view illustrating a sensor in the sensing device.
[FIG. 7] FIG. 7 is a cross-sectional view taken along the arrows X-X of FIG. 5.
[FIG. 8] FIG. 8 is a cross-sectional view taken along the arrows Y-Y of FIG. 5.
[FIG. 9] FIG. 9 is a plan view of a supporting section in the sensing device.
[FIG. 10] FIG. 10 illustrates the supporting section in the sensing device from an opening on the end of the supporting section.
[FIG. 11] FIG. 11 is a bottom view of the sensor in the sensing device.
[FIG. 12] FIG. 12 is a plan view of the sensing device with a maximum distance between the sensor and a mount.
[FIG. 13] FIG. 13 illustrates a conventional sensing device.

### Description of Embodiment

An embodiment of the present invention will be described below with reference to the accompanying drawings.

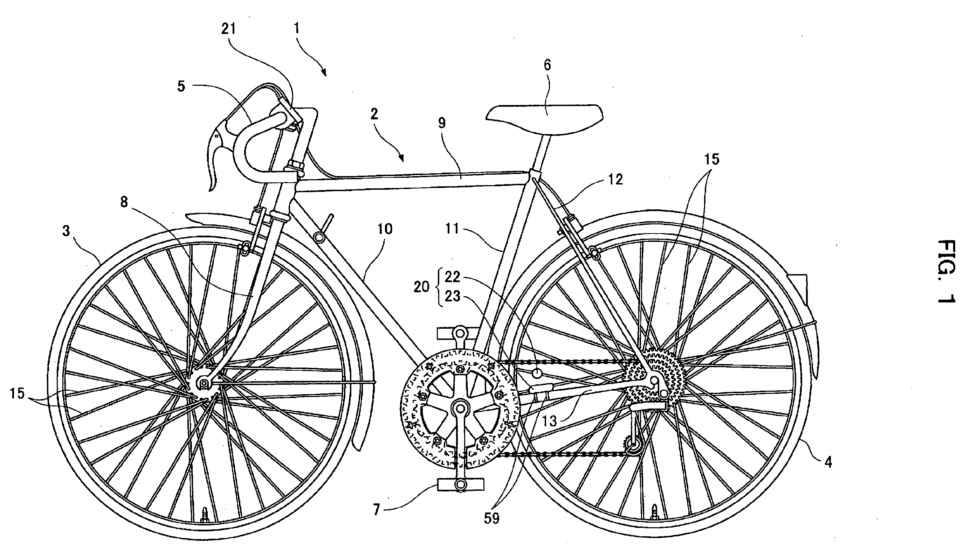

As shown in FIG. 1, reference numeral 1 denotes a bicycle 1 that includes a frame 2, a front wheel 3, a rear wheel 4, a handlebar 5, a saddle 6, and pedals 7. The frame 2 has a front fork 8, a top tube 9, a down tube 10, a seat tube 11, a seat stay 12, and a chain stay 13.

The bicycle 1 includes a speed sensing device 20 (an example of a sensing device) that detects the rotation of the rear wheel 4 and determines a traveling speed based on the detected value and a display device 21 that displays the detected traveling speed.

As shown in FIGS. 1 to 5, the speed sensing device 20 includes a mobile-side sensing body 22 provided on a spoke 15 of the rear wheel 4 and an immobile-side sensing body 23 provided on the chain stay 13 of the frame 2. The mobile-side sensing body 22 includes a mounting member 25 mounted on the spoke 15 and a magnet 26 provided on the mounting member 25.

The immobile-side sensing body 23 includes a mount 29 (an example of a mounting section) attached to the chain stay 13, a sensor 30 that detects the magnetism of the magnet 26 crossing the immobile-side sensing body 23 in a vertical direction G during a rotation of the rear wheel 4, and a supporting section 31 that supports the sensor 30. The sensor 30 can move with respect to the supporting section 31 in a first direction A that increases or reduces a distance D between the mount 29 and the sensor 30 and can pivot in a second direction B different from the first direction A.

In this case, the first direction A corresponds to the lateral direction of the bicycle 1 and the second direction B corresponds to the longitudinal direction of the bicycle 1. The sensor 30 can linearly move on a travel path 32 in the first direction A.

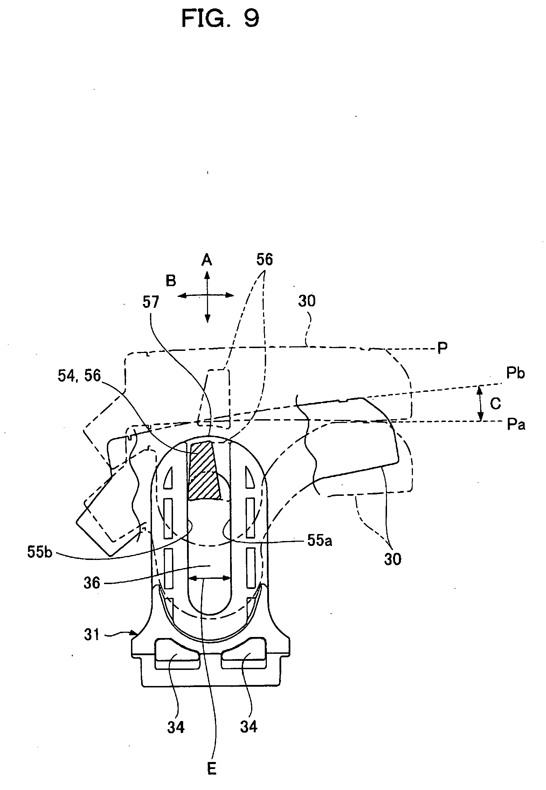

The mount 29 has a curved mounting surface 33 that can come into contact with the chain stay 13. The supporting section 31 is provided on the mount 29 and has a long hole 36 (see FIG. 9) in the first direction A.

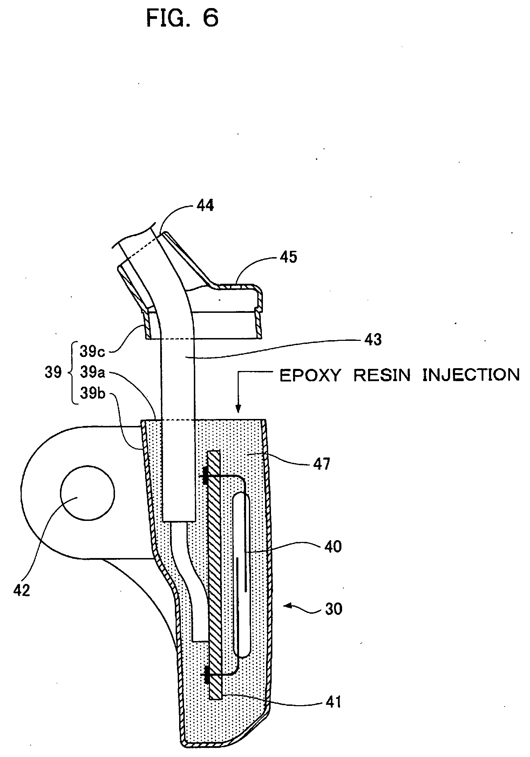

The sensor 30 is connected and fixed to the supporting section 31 with a fixing member 38. As shown in FIG. 6, the sensor 30 includes a casing 39, a magnetism sensing element 40 provided in the casing 39, and a substrate 41. The casing 39 has a through hole 42. The magnetism sensing element 40 is provided with a reed switch that transmits a signal each time the magnet 26 crosses the immobile-side sensing body 23. The magnetism sensing element 40 is soldered to the substrate 41.

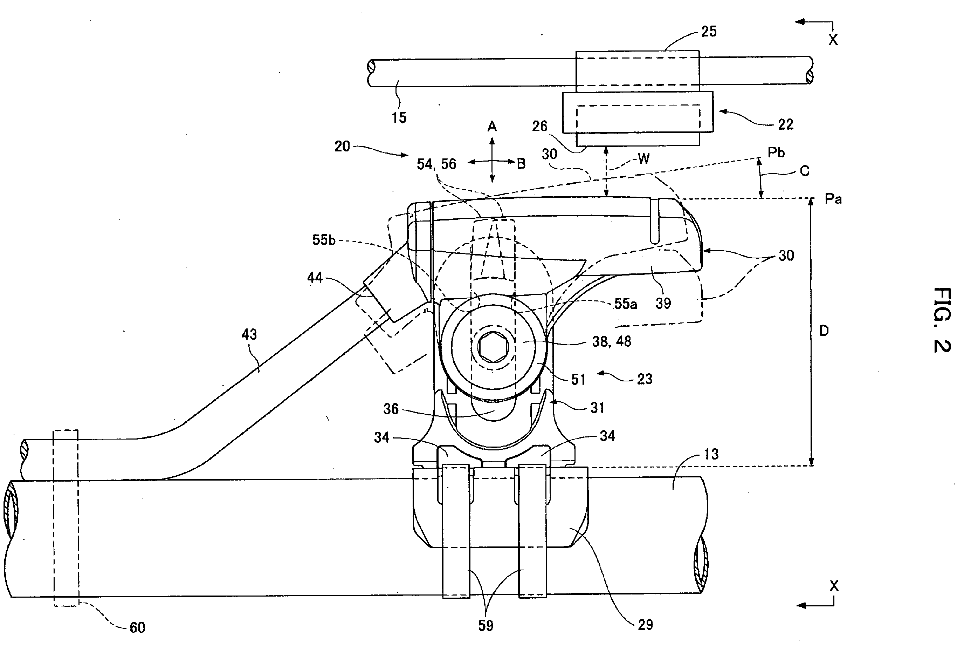

The casing 39 includes a casing body 39b having an opening 39a on one end of the casing 39 and a lid 39c that is fit to one end of the casing body 39b so as to close the opening 39a. The substrate 41 is connected to one end of a transmission cable 43. The lid 39c has an insertion hole 44 for inserting the cable 43 and an air vent hole 45. As shown in FIG. 2, the insertion hole 44 is diagonally formed with respect to the mount 29. As shown in FIG. 6, the casing 39 is filled with an epoxy resin 47.

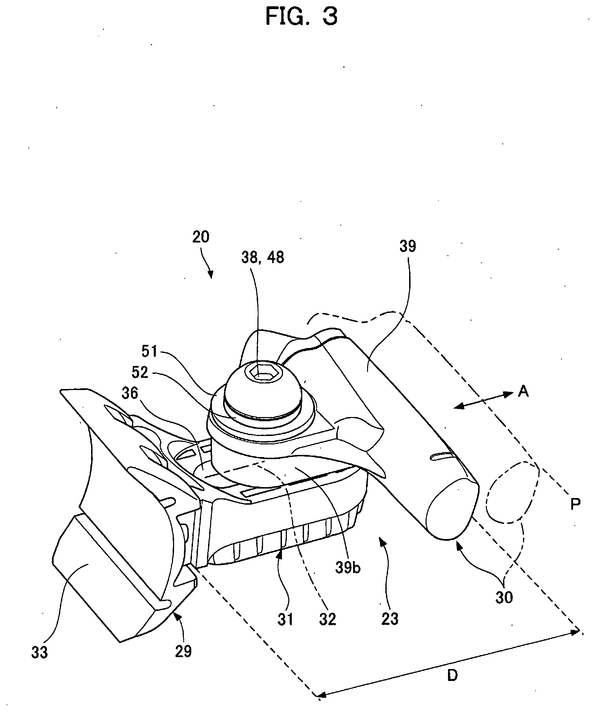

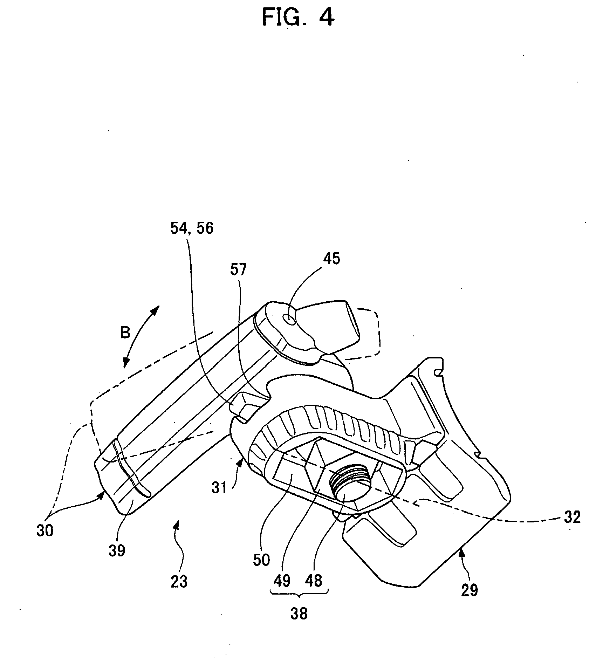

As shown in FIGS. 3, 4, 7, and 8, the fixing member 38 has a hexagon socket screw 48 and a nut 49. The screw 48 is inserted through the through hole 42 of the sensor 30 and the long hole 36 of the supporting section 31 and then is screwed into the nut 49 in a direction perpendicular to the first direction A. The nut 49 is fit like a detent to a concave portion 50 formed on the supporting section 31. The concave portion 50 communicates with the long hole 36 and is opened on the back side of the supporting section 31, opposite to the front side adjacent to the sensor 30. As indicated by a virtual line in FIG. 2 and a virtual line in FIG. 4, the sensor 30 can pivot about the screw 48 in the second direction B. The screw 48 screwed into the nut 49 fixes the sensor 30 in the first direction A and the second direction B.

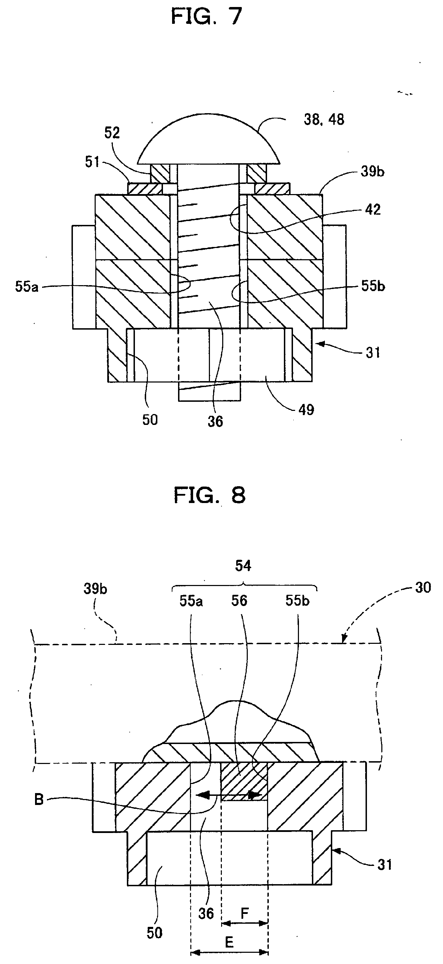

As shown in FIG. 7, a plain washer 51 and a spring washer 52 are provided between the head of the screw 48 and the casing body 39b of the sensor 30.

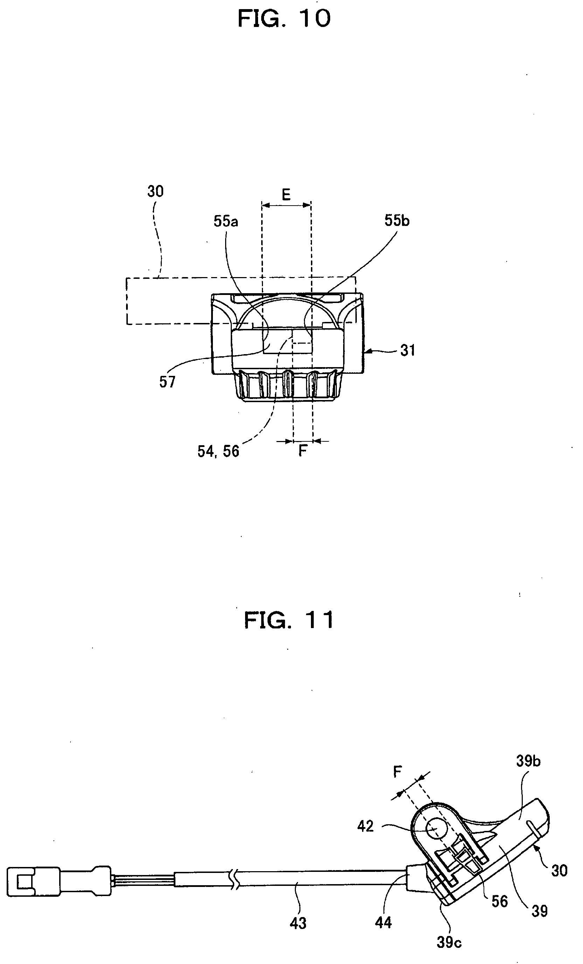

As shown in FIGS. 2, 4, and 8 to 11, the immobile-side sensing body 23 includes a guide device 54 that guides the sensor 30 in the first direction A and regulates the pivoting of the sensor 30 in a fixed range C. The guide device 54 includes a pair of guide surfaces 55a and 55b provided in the supporting section 31 and a guide protrusion 56 provided on the sensor 30. The guide surfaces 55a and 55b are formed on the front side adjacent to the sensor 30, are in parallel with each other along the first direction A, and are opposed to each other in the second direction B. The long hole 36 is opened between the guide surfaces 55.

The guide protrusion 56 is inserted between the guide surfaces 55a and 55b. As shown in FIG. 8, a distance E between the guide surfaces 55a and 55b is set slightly larger than a width F of the guide protrusion 56. The pivoting of the sensor 30 is accepted between a position where the guide protrusion 56 comes into contact with the guide surface 55a (see a virtual line in FIG. 9) and a position where the guide protrusion 56 comes into contact with the guide surface 55b (see solid lines in FIGS. 8 and 9).

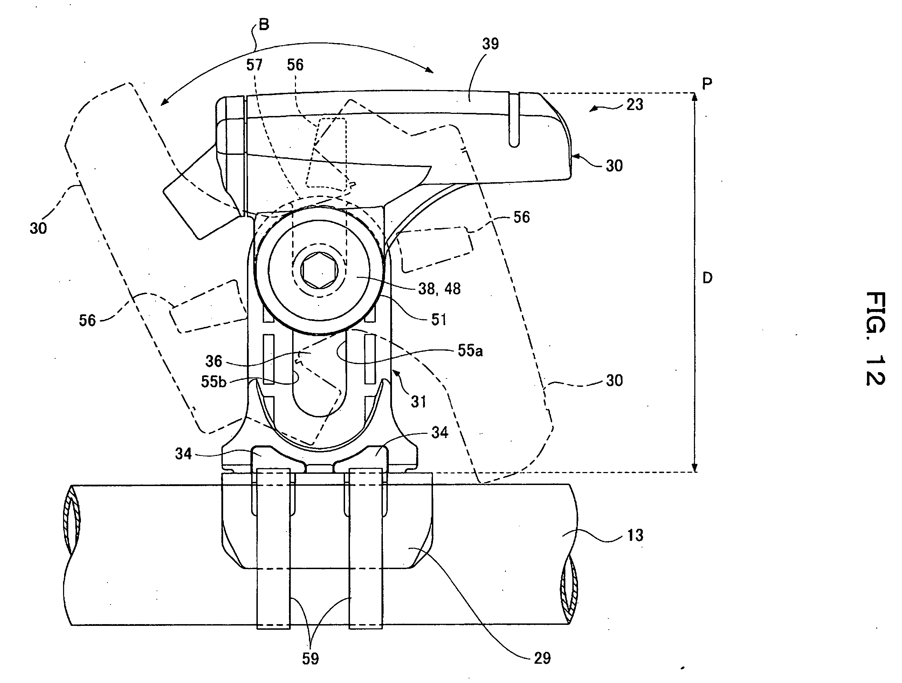

The end of the supporting section 31 has an opening 57 that is opened from the guide surfaces 55a and 55b. As indicated by the virtual line in FIG. 9 and shown in FIG. 12, if the sensor 30 moves in the first direction A to a release position P where the distance D between the mount 29 and the sensor 30 is maximized, the guide protrusion 56 is removed to the outside of the guide surfaces 55a and 55b from the opening 57, causing the guide device 54 to lift a restriction on the pivoting range of the sensor 30.

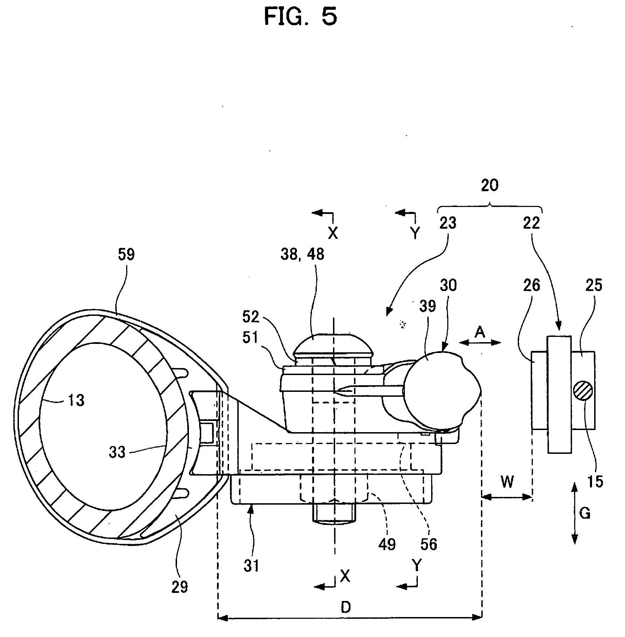

The proximal end of the supporting section 31 has a plurality of mounting holes 34. As shown in FIGS. 2 and 5, a binding band 59 (an example of a mounting member) is inserted into the mounting hole 34 and is wound and bound around the chain stay 13, thereby attaching the mount 29 to the chain stay 13.

As shown in FIG. 1, the display device 21 having a liquid crystal display screen is attached to the handlebar 5.

The effects of the configuration will be described below.

As shown in FIGS. 2 and 5, the mobile-side sensing body 22 is attached to the spoke 15 of the rear wheel 4. The mounting surface 33 of the mount 29 of the immobile-side sensing body 23 is brought into contact with the surface of the chain stay 13 according to the mounting position of the mobile-side sensing body 22, and the band 59 is inserted through the mounting hole 34 so as to be wound and bound around the chain stay 13, thereby attaching the immobile-side sensing body 23 to the chain stay 13.

After that, the screw 48 is unscrewed so as to release the sensor 30, allowing the sensor 30 to move in the first direction A and pivot in the second direction B. A movement of the sensor 30 in the first direction A can precisely and easily adjust the mounting position of the sensor 30 with respect to the mobile-side sensing body 22. Furthermore, the pivoting of the sensor 30 about the screw 48 in the second direction B can precisely and easily adjust the orientation of the sensor 30 with respect to the mobile-side sensing body 22.

The mounting position and orientation of the sensor 30 are adjusted in this way, and then the screw 48 is screwed into the nut 49. Thus, the sensor 30 is fixed to the supporting section 31 so as to keep a distance W between the sensor 30 and the magnet 26 of the mobile-side sensing body 22 at a normal distance and set the orientation of the sensor 30 at a normal orientation with respect to the magnet 26. This can prevent a reduction in the sensitivity of the speed sensing device 20.

As has been discussed, when the sensor 30 is moved in the first direction A, the guide protrusion 56 is moved in the first direction A while being guided by the guide surfaces 55a and 55b, allowing the sensor 30 to smoothly and reliably move in the first direction A.

As shown in FIGS. 2 and 9, when the sensor 30 is pivoted in the second direction B, the pivoting of the sensor 30 is restricted to the fixed range C that is limited by a position Pa where the guide protrusion 56 comes into contact with one of the guide surfaces, or the guide surface 55a, and a position Pb where the guide protrusion 56 comes into contact with the other, or the guide surface 55b. When the screw 48 is screwed into the nut 49 to fix the sensor 30 to the supporting section 31, the sensor 30 does not pivot beyond the fixed range C. This facilitates an operation for fixing the sensor 30 by screwing the screw 48.

As shown in FIG. 2, the sensor 30 is connected and fixed to the supporting section 31 with the screw 48, reducing the number of components for connecting the sensor 30 to the supporting section 31 and the number of components for fixing the mounting position of the sensor 30.

The insertion hole 44 on the casing 39 of the sensor 30 is diagonally formed with respect to the mount 29. Thus, the cable 43 drawn out of the casing 39 through the insertion hole 44 can be easily extended along the surface of the chain stay 13 without being forcibly bent. This can easily attach the cable 43 to the chain stay 13 with a binding band 60 and so on.

Moreover, as indicated by the virtual line in FIG. 9 and shown in FIG. 12, the screw 48 is unscrewed, and then the sensor 30 is moved to the release position P so as to maximize the distance D between the mount 29 and the sensor 30. In this case, the guide protrusion 56 is removed to the outside of the guide surfaces 55a and 55b from the opening 57, causing the guide device 54 to lift a restriction on the pivoting range of the sensor 30. Thus, as indicated by a virtual line in FIG. 12, the sensor 30 at the release position P can be freely pivoted about the screw 48 beyond the fixed range C.

As shown in FIG. 1, during the traveling of the bicycle 1, the rotation of the rear wheel 4 causes the mobile-side sensing body 22 to cross the side of the immobile-side sensing body 23 in the vertical direction G as shown in FIGS. 2 and 5. At this point, the sensor 30 of the immobile-side sensing body 23 detects the magnetism of the magnet 26 of the mobile-side sensing body 22 to transmit a signal. Thus, the rotation of the rear wheel 4 is detected, the traveling speed of the bicycle 1 is calculated based on the rotation, and then the calculated traveling speed is displayed on the liquid crystal display screen of the display device 21.

In the fabrication of the sensor 30 of the speed sensing device 20, as shown in FIG. 6, the cable 43 is inserted through the insertion hole 44 of the lid 39c. The substrate 41 and the magnetism sensing element 40 are provided in the casing body 39b from the opening 39a while the one end of the cable 43 is connected to the substrate 41. Subsequently, the liquid epoxy resin 47 is injected into the casing body 39b from the opening 39a, and then the lid 39c is fit into the opening 39a of the casing body 39b so as to close the opening 39a, assembling the casing 39.

At this point, air in the casing 39 is discharged to the outside from the hole 45. The epoxy resin 47 is then cooled and solidified, fabricating the sensor 30.

In the embodiment, as shown in FIG. 1, the mobile-side sensing body 22 is provided on the spoke 15 of the rear wheel 4 and the immobile-side sensing body 23 is provided on the chain stay 13 to detect the rotation of the rear wheel 4. The rotation of the front wheel 3 may be detected by the mobile-side sensing body 22 provided on the spoke 15 of the front wheel 3 and the immobile-side sensing body 23 provided on the front fork 8 of the frame 2.

In the embodiment, the sensing device 20 detects the rotation of the rear wheel 4 and determines the traveling speed of the bicycle 1 based on the detection. In addition to the traveling speed, the sensing device 20 may determine, for example, the travel distance of the bicycle 1 based on the detected rotation of the rear wheel 4.

In the embodiment, as shown in FIG. 8, the guide surfaces 55a and 55b are provided in the supporting section 31 while the guide protrusion 56 is provided on the sensor 30. The guide surfaces 55a and 55b may be provided on the sensor 30 while the guide protrusion 56 may be provided in the supporting section 31.

In the embodiment, the sensing device 20 provided on the bicycle 1 may be provided on a power-assisted bicycle.

## Claims

1. A sensing device (20) that detects a rotation of a wheel (4) of a bicycle (1),
the sensing device (20) comprising:
a mobile-side sensing body (22) providable on the wheel (4); and
an immobile-side sensing body (23) providable on a frame (2) of the bicycle,
the immobile-side sensing body (23) including a mounting section (29) attached to the frame (2), a sensor (30) that detects the mobile-side sensing body (22) crossing the immobile-side sensing body (23) during a rotation of the wheel (4), and a supporting section (31) that supports the sensor (30),
the sensor (30) being movable linearly on a travel path in a first direction (A) that increases or reduces a distance (D) between the mounting section (29) and the sensor (30) with respect to the supporting section (31),
the sensor (30) including a fixing member (38) that fixes the sensor (30) to the supporting section (31),
wherein the sensor (30) is pivotable about the supporting section (31) in a second direction (B) different from the first direction (A).

2. The sensing device (20) according to claim 1, wherein the fixing member (38) connects the sensor (30) and the supporting section (31), and
the sensor (30) is pivotable about the fixing member (38) in the second direction (B).

3. The sensing device (20) according to claim 2, further comprising a guide device (54) that guides the sensor (30) in the first direction (A) and limits pivoting of the sensor (30) to a fixed range (C).

4. The sensing device (20) according to claim 3, wherein the guide device (54) has a pair of guide surfaces (55a, 55b) provided on one of the supporting section (31) and the sensor (30), and a guide protrusion (56) that is provided on the other and is inserted between the guide surfaces (55a, 55b), and
the guide surfaces (55a, 55b) are formed along the first direction (A) and are opposed to each other in the second direction (B).

5. The sensing device (20) according to claim 4, wherein if the sensor (30) is moved in the first direction (A) to a release position where the distance (D) between the mounting section (29) and the sensor (30) is maximized, the guide protrusion (56) is removed from the guide surfaces (55a, 55b) so as to cause the guide device (54) to lift a restriction on the pivoting range of the sensor (30).

6. A bicycle (1) comprising the sensing device (20) according to any one of claims 1 to 5, wherein the mobile-side sensing body (22) is attached to a spoke (15) of the wheel (4).

## Patentansprüche

1. Eine Sensorvorrichtung (20), die eine Drehung eines Rads (4) eines Fahrrads (1) detektiert,
die Sensorvorrichtung (20) beinhaltet:
einen mobilseitigen Sensorkörper (22), der an dem Rad (4) bereitgestellt werden kann, und
einen immobilseitigen Sensorkörper (23), der an einem Rahmen (2) bereitgestellt werden kann,
der immobilseitige Sensorkörper (23) beinhaltet ein Montageabschnitt (29), der an dem Rahmen (2) angebracht ist, ein Sensor (30), der den mobilseitigen Sensorkörper (22) detektiert, wenn dieser den immobilseitigen Sensorkörper (23) während einer Drehung des Rads (4) passiert, und ein Unterstützungsabschnitt (31), der den Sensor (30) unterstützt,
der Sensor (30) ist linear an einem Verschiebepfad in einer ersten Richtung (A) beweglich, was eine Distanz (D) zwischen dem Montageabschnitt (29) und dem Sensor (30) in Bezug zu dem Unterstützungsabschnitt (31) erhöht oder reduziert,
der Sensor (30) beinhaltet ein Fixierglied (38), das den Sensor (30) an dem Unterstützungsabschnitt (31) fixiert,
wobei der Sensor (30) um den Unterstützungsabschnitt (31) in einer zweiten Richtung (B) unterschiedlich von der ersten Richtung (A) drehbar ist.

2. Die Sensorvorrichtung (20) gemäß Anspruch 1, wobei das Fixierglied (38) den Sensor (30) und den Unterstützungsabschnitt (31) verbindet, und der Sensor (30) um das Fixierglied (38) in der zweiten Richtung (B) drehbar ist.

3. Die Sensorvorrichtung (20) gemäß Anspruch 2, weiter aufweisend eine Führungsvorrichtung (54), die den Sensor (30) in der ersten Richtung (A) führt und ein Drehen des Sensors (30) in einem festen Bereich (C) begrenzt.

4. Die Sensorvorrichtung (20) gemäß Anspruch 3, wobei die Führungsvorrichtung (54) ein Paar von Führungsflächen (55a, 55b) hat, die an dem Unterstützungsabschnitt (31) oder dem Sensor (30) vorgesehen ist, und ein Führungsvorsprung (56), der an dem anderen bereitgestellt ist, und zwischen die Führungsflächen (55a, 55b) eingesetzt ist, und die Führungsflächen (55a, 55b) sind entlang der ersten Richtung (A) geformt und gegenüberliegend zueinander in der zweiten Richtung (B).

5. Die Sensorvorrichtung (20) gemäß Anspruch 4, wobei, wenn der Sensor (30) in der ersten Richtung (A) zu einer Freigabeposition bewegt wird, bei der die Distanz (D) zwischen dem Montageabschnitt (29) und dem Sensor (30) maximiert ist, der Führungsvorsprung (56) von den Führungsflächen (55a, 55b) entfernt wird, so dass die Führungsvorrichtung (54) eine Restriktion des Drehbereichs des Sensors (30) aufhebt.

6. Ein Fahrrad (1) aufweisend die Sensorvorrichtung (20) gemäß einem der Ansprüche 1 bis 5, wobei der mobilseitige Sensorkörper (22) an einer Speiche (15) des Rades (4) angebracht ist.

## Revendications

1. Dispositif de détection (20) qui détecte la rotation d'une roue (4) de bicyclette (1), le dispositif de détection (20) comprenant :
un corps de détection côté mobile (22) qui peut être pourvu sur la roue (4) ; et
un corps de détection côté immobile (23) qui peut être pourvu sur un châssis (2) de la bicyclette ;
le corps de détection côté immobile (23) comprenant une section de montage (29) attachée au châssis (2), un capteur (30) qui détecte le corps de détection côté mobile (22) passant devant le corps de détection côté immobile (23) durant une rotation de la roue (4), et une section de support (31) qui supporte le capteur (30),
le capteur (30) pouvant être déplacé linéairement sur une course de déplacement dans une première direction (A) qui augmente ou réduit une distance (D) entre la section de montage (29) et le capteur (30) par rapport à la section de support (31),
le capteur (30) comprenant un élément de fixation (38) qui fixe le capteur (30) à la section de support (31) ,
dans lequel le capteur (30) peut pivoter autour de la section de support (31) dans une deuxième direction (B) différente de la première direction (A).

2. Dispositif de détection (20) selon la revendication 1, dans lequel
l'élément de fixation (38) connecte le capteur (30) et la section de support (31), et
le capteur (30) peut pivoter autour de l'élément de fixation (38) dans la deuxième direction (B).

3. Dispositif de détection (20) selon la revendication 2, comprenant en outre un dispositif de guidage (54) qui guide le capteur (30) dans la première direction (A) et limite le pivotement du capteur (30) à une plage fixée (C).

4. Dispositif de détection (20) selon la revendication 3, dans lequel
le dispositif de guidage (54) comporte une paire de surfaces de guidage (55a, 55b) pourvue sur un élément parmi la section de support (31) et le capteur (30), et une projection de guidage (56) qui est pourvue sur l'autre élément et est insérée entre les surfaces de guidage (55a, 55b), et
les surfaces de guidage (55a, 55b) sont formées le long de la première direction (A) et sont opposées entre elles selon la deuxième direction (B).

5. Dispositif de détection (20) selon la revendication 4, dans lequel, si le capteur (30) est déplacé dans la première direction (A) jusqu'à une position de libération où la distance (D) entre la section de montage (29) et le capteur (30) est maximisée, la projection de guidage (56) est éliminée des surfaces de guidage (55a, 55b) de manière à ce que le dispositif de guidage (54) lève une restriction sur la plage de pivotement du capteur (30).

6. Bicyclette (1) comprenant le dispositif de détection (20) selon l'une quelconque des revendications 1 à 5, dans laquelle le corps de détection côté mobile (22) est attaché à un rayon (15) de la roue (4).
